# EUROPEAN PATENT APPLICATION

(11) **EP 4 835 003 A1**
(43) Date of publication of application: **04.11.2026**
(21) Application number: 24912320.9
(22) Date of filing: 09.12.2024
(51) Int. Cl.: C08L 71/00, C08G 65/323, C08G 65/336, C08K 3/013, C08K 3/34

(54) **PEROXIDE-CROSSLINKED FLUORORUBBER COMPOSITION, METHOD FOR PRODUCING SAME, AND RUBBER MOLDED ARTICLE**

(30) Priority: 25.12.2023 JP 2023217512
(71) Applicant: SHIN-ETSU CHEMICAL CO., LTD., Tokyo 100-0005 (JP)
(72) Inventor: ASAHI Tomoyuki, Annaka-shi, Gunma 379-0224 (JP)
(74) Representative: Ter Meer und Partner mbB
(86) International application number: PCT/JP2024/043416
(87) International publication number: WO 2025/142431

(57) **Abstract**

This peroxide-crosslinked fluororubber composition is characterized by containing
(a) a perfluoropolyether-based fluororubber mixture and
(b) an organopolysiloxane
and having a volume ratio (a):(b) of the component (a) to the component (b) of 95:5 to 99:1, and gives a cured product which is excellent in terms of heat resistance, chemical resistance, solvent resistance, low-temperature characteristics, and the like, and has excellent roll processability.

## Description

### TECHNICAL FIELD

The present invention relates to a peroxide-crosslinked fluororubber composition that gives a cured product excellent in terms of heat resistance, chemical resistance, solvent resistance, low-temperature characteristics, and the like and that has excellent roll processability, a method for producing the composition, and a rubber molded article obtained by curing the composition.

### BACKGROUND ART

Patent Document 1 (JP-A 2003-201401) discloses a perfluoropolyether-based fluororubber composition that is excellent in terms of heat resistance, chemical resistance, solvent resistance, low-temperature characteristics, and the like. However, roll processability thereof was insufficient.

To improve roll processability, Patent Document 2 (JP-A 2006-161032) proposes mixing such a perfluoropolyether-based fluororubber composition with silicone rubber.

However, the perfluoropolyether-based fluororubber composition described in Patent Document 2, while having improved roll processability, has decreased solvent resistance, thus leaving room for improvement.

### PRIOR ART DOCUMENTS

### PATENT DOCUMENTS

Patent Document 1: JP-A 2003-201401
Patent Document 2: JP-A 2006-161032

### SUMMARY OF INVENTION

### TECHNICAL PROBLEM

The present invention has been made in view of the above circumstances, and an object thereof is to provide a peroxide-crosslinked fluororubber composition that gives a cured product excellent in terms of heat resistance, chemical resistance, solvent resistance, low-temperature characteristics, and the like and that has excellent roll processability, a method for producing the composition, and a rubber molded article obtained by curing the composition.

### SOLUTION TO PROBLEM

As a result of intensive studies conducted to achieve the above object, the present inventor has found that a peroxide-crosslinked fluororubber composition containing (a) a perfluoropolyether-based fluororubber mixture and (b) an organopolysiloxane, wherein the volume ratio of components (a) and (b) is (a):(b) = 95:5 to 99:1, gives a cured product excellent in terms of heat resistance, chemical resistance, solvent resistance, low-temperature characteristics, and the like and has excellent roll processability, thereby completing the present invention.

Thus, the present invention provides a peroxide-crosslinked fluororubber composition, a method for producing the same, and a rubber molded article, as described below.
[1] A peroxide-crosslinked fluororubber composition containing:
   (a) a perfluoropolyether-based fluororubber mixture; and
   (b) an organopolysiloxane,
   wherein a volume ratio of components (a) and (b) is (a):(b) = 95:5 to 99:1.
[2] The peroxide-crosslinked fluororubber composition according to [1], wherein the perfluoropolyether-based fluororubber mixture (a) is composed of
   (A) an addition reaction product of a perfluoro compound (I) having at least two alkenyl groups in a molecule and having a perfluoroalkylene group or a divalent perfluoropolyether group in a main chain and an organosilicon compound (II) having at least two SiH groups in a molecule, and
   (B) a reinforcing filler.
[3] The peroxide-crosslinked fluororubber composition according to [1] or [2], wherein the organopolysiloxane (b) is an organopolysiloxane represented by the following average compositional formula (1):

   (R¹¹)ₓSiO_{(4-x)/2} (1)

   wherein R¹¹ is an unsubstituted or substituted monovalent hydrocarbon group, and x is a number satisfying 1.85 < x < 2.10.
[4] The peroxide-crosslinked fluororubber composition according to [2] or [3], wherein component (I) is a perfluoro compound represented by the following general formula (2):

   Rf[-U-Z(-Y-X)_{β}]₂ (2)

   wherein Rf is a perfluoroalkylene group or a divalent perfluoropolyether group, U is independently a single bond, a carbonyl bond, or a divalent organic group, Z is independently a single bond, a nitrogen atom, a silicon atom, a carbon atom, a phosphorus atom, or a trivalent to octavalent organic group, Y is independently a single bond or a divalent organic group, X is independently an alkenyl group, and β is an integer of 1 to 7, provided that U and Z are not simultaneously single bonds.
[5] The peroxide-crosslinked fluororubber composition according to [4], wherein Rf in formula (2) includes one or more repeating units (perfluorooxyalkylene units) represented by

   -CₐF₂ₐO

   wherein a is an integer of 1 to 6.
[6] The peroxide-crosslinked fluororubber composition according to any one of [2] to [5], wherein component (II) is an organosilicon compound represented by the following general formula (3): 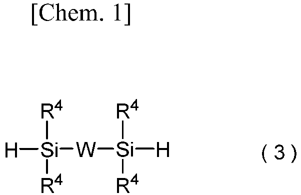 wherein R⁴ is independently an unsubstituted or substituted monovalent hydrocarbon group containing no aliphatic unsaturated bond, and W is a divalent organic group.
[7] The peroxide-crosslinked fluororubber composition according to [6], wherein W in formula (3) is a group represented by any of formulae (i) to (iii): 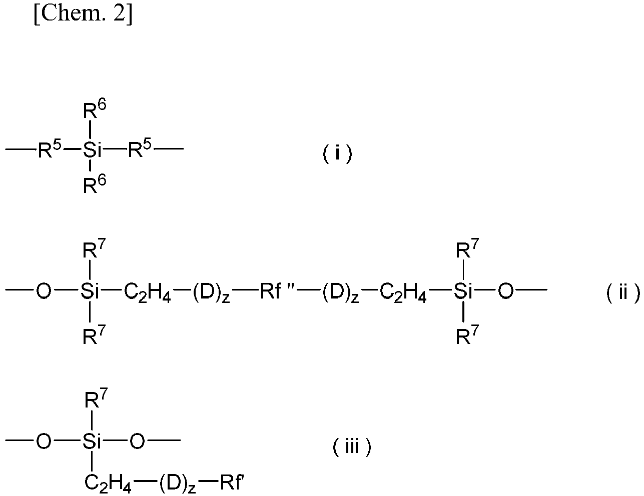
   wherein Rf" is a perfluoroalkylene group or a divalent perfluoropolyether group; R⁵ is independently an oxygen atom or an unsubstituted or substituted divalent hydrocarbon group; R⁶ is independently an unsubstituted or substituted monovalent hydrocarbon group; R⁷ is an unsubstituted or substituted monovalent hydrocarbon group or a dimethylsiloxy group; D is independently -CH₂-, -CH₂O-, -CH₂OCH₂-, -E-NR⁸SO₂-, or -E-NR⁸-CO- wherein E is -CH₂- or a group represented by the following formula: 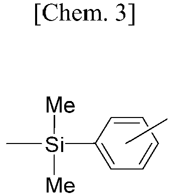
   wherein Me is a methyl group, and
   R⁸ is a hydrogen atom or an unsubstituted or substituted monovalent hydrocarbon group; Rf' is a monovalent perfluoropolyether group or a perfluoroalkyl group; and z is independently 0 or 1.
[8] The peroxide-crosslinked fluororubber composition according to any one of [2] to [7], wherein the reinforcing filler (B) is a silica-based reinforcing filler, quartz powder, fused quartz powder, diatomaceous earth, or calcium carbonate.
[9] A rubber molded article obtained by curing the peroxide-crosslinked fluororubber composition according to any one of [1] to [8].
[10] A method for producing the peroxide-crosslinked fluororubber composition according to any one of [1] to [8], the method including kneading component (a) and component (b) using a closed-type kneading machine.
[11] The method for producing the peroxide-crosslinked fluororubber composition according to [10], wherein the closed-type kneading machine is a pressure kneader or a Banbury mixer.

### ADVANTAGEOUS EFFECTS OF INVENTION

The peroxide-crosslinked fluororubber composition according to the present invention can provide a peroxide-crosslinked fluororubber composition excellent in terms of heat resistance, chemical resistance, solvent resistance, low-temperature characteristics, and the like and having excellent roll processability.

### DESCRIPTION OF EMBODIMENTS

In the present invention, "roll processability" means ease of processing (workability) at the time of performing roll processing such as kneading on a fluororubber composition using a processing roll such as a two-roll mill, and is indicated by the degree of adhesion of the fluororubber composition to the processing roll during the roll processing.

Hereinafter, the present invention will be described in detail.

A peroxide-crosslinked fluororubber composition according to the present invention contains:
(a) a perfluoropolyether-based fluororubber mixture, and
(b) an organopolysiloxane,
wherein the volume ratio of components (a) and (b) is (a):(b) = 95:5 to 99:1.

### [Component (a): Perfluoropolyether-based fluororubber mixture]

The perfluoropolyether-based fluororubber mixture as component (a) is composed of
(A) an addition reaction product of a perfluoro compound (I) having at least two alkenyl groups in the molecule and having a perfluoroalkylene group or a divalent perfluoropolyether group in the main chain and an organosilicon compound (II) having at least two SiH groups in the molecule, and
(B) a reinforcing filler.

### [Component (A)]

Component (A) is an addition reaction product of a perfluoro compound (I) having at least two alkenyl groups in the molecule and having a perfluoroalkylene group or a divalent perfluoropolyether group in the main chain and an organosilicon compound (II) having at least two SiH groups in the molecule. The addition reaction product as component (A) is a high-molecular-weight polymer, and is preferably a (highly viscous) non-liquid (raw rubber-like) perfluoropolyether-based fluororubber having no self-flowability at room temperature (25°C ± 15°C).

### < (I): Perfluoro compound having at least two alkenyl groups in molecule and having perfluoroalkylene group or divalent perfluoropolyether group in main chain >

Component (I) is a perfluoro compound having at least two alkenyl groups in the molecule and having a perfluoroalkylene group or a divalent perfluoropolyether group in the main chain. The perfluoro compound as component (I) is a compound that is technically difficult, by itself, to be synthesized into a high-molecular-weight polymer such as a resin or rubber, and is a linear perfluoro compound having at least two (e.g., 2 to 14), preferably 2 to 6, particularly preferably two alkenyl groups in the molecule and having a perfluoroalkylene group or a divalent perfluoropolyether group in the main chain, and preferably having a kinematic viscosity at 25°C of 25 to 1,000,000 mm²/s.

Such component (I) is preferably a perfluoro compound represented by the following general formula (2).

Rf[-U-Z(-Y-X)_{β}]₂ (2)

(In the formula, Rf is a perfluoroalkylene group or a divalent perfluoropolyether group, U is independently a single bond, a carbonyl bond, or a divalent organic group, Z is independently a single bond, a nitrogen atom, a silicon atom, a carbon atom, a phosphorus atom, or a trivalent to octavalent organic group, Y is independently a single bond or a divalent organic group, X is independently an alkenyl group, and β is an integer of 1 to 7, provided that U and Z are not simultaneously single bonds.)

In formula (2), Rf is a perfluoroalkylene group or a divalent perfluoropolyether group, preferably a divalent perfluoropolyether group.

The perfluoroalkylene group is preferably CₙF₂ₙ (n is an integer of 1 to 6, preferably an integer of 2 to 4), and examples thereof include those shown below.

-CF₂-

-CF₂CF₂-

-CF₂CF₂CF₂-

-CF₂CF₂CF₂CF₂-

-CF₂CF₂CF₂CF₂CF₂-

-CF₂CF₂CF₂CF₂CF₂CF₂-

The divalent perfluoropolyether group includes a repeating unit (perfluorooxyalkylene unit) represented by the following formula:

-CₐF₂ₐO-

(in the formula, a is an integer of 1 to 6), and examples thereof include those represented by the following general formula (4).

-(CₐF₂ₐO)_{b}- (4)

(In the formula, a is an integer of 1 to 6, and b is an integer of 1 to 300, preferably an integer of 1 to 200.)

Examples of the repeating unit represented by -CₐF₂ₐO- include units represented by the following formulae.

-CF₂O-

-CF₂CF₂O-

-CF₂CF₂CF₂O-

-CF(CF₃)CF₂O-

-CF(CF₃)OCF₂-

-CF₂OCF(CF₃)-

-CF₂CF₂CF₂CF₂O-

-CF₂CF₂CF₂CF₂CF₂O-

-CF₂CF₂CF₂CF₂CF₂CF₂O-

-C(CF₃)₂O-

Of these, repeating units represented by the following formulae are particularly preferred.

-CF₂O-

-CF₂CF₂O-

-CF₂CF₂CF₂O-

-CF(CF₃)CF₂O-

-CF(CF₃)OCF₂-

-CF₂OCF(CF₃)-

The divalent perfluoropolyether group may be composed of one kind of the above repeating units, or may be composed of a combination of two or more kinds thereof.

Preferred examples of Rf include groups represented by the following formulae. 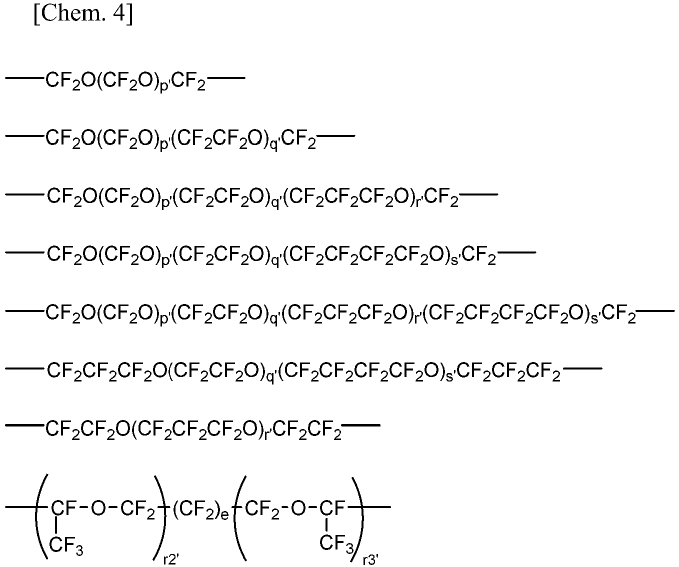 (In the formulae, p', q', r', s', r2', and r3' are each an integer of 1 or more, and the sum of p', q', r', s', r2', and r3' is 2 to 300. e is an integer of 0 to 6. The repeating units indicated in parentheses with p', q', r', and s' may be randomly bonded.)

In formula (2), U is independently a single bond, a carbonyl bond, or a divalent organic group. The divalent organic group is preferably an unsubstituted or substituted divalent hydrocarbon group having 2 to 12 carbon atoms, and examples thereof include alkylene groups such as an ethylene group, a propylene group (a trimethylene group, a methylethylene group), a butylene group (a tetramethylene group, a methylpropylene group), a hexamethylene group, and an octamethylene group, arylene groups such as a phenylene group, and combinations of two or more of these groups (e.g., alkylene-arylene groups). The divalent hydrocarbon group having 2 to 12 carbon atoms may contain one or more structures selected from the group consisting of an amide bond, an ether bond, a carbonyl bond, an ester bond, a diorganosilylene group such as a dimethylsilylene group, and a group represented by -Si[OH][(CH₂)_{f}Si(CH₃)₃]- (f is an integer of 2 to 4), and may be a group in which some or all of the hydrogen atoms bonded to the carbon atoms are substituted with halogen atoms such as fluorine or iodine.

The number of carbon atoms in the divalent hydrocarbon group having 2 to 12 carbon atoms, which is a preferred divalent organic group, is the counted number of carbon atoms in an unsubstituted divalent hydrocarbon group; for example, when the above structure such as a dimethylsilylene group is interposed in the divalent hydrocarbon group, the number of carbon atoms in the structure is not counted.

Examples of U include groups represented by the following structures. In the following structures, the bond on the left side is preferably bonded to Rf, and the bond on the right side is preferably bonded to Z.

-(CH₂)ᵤ-O-(CH₂)ᵥ-

-CF₂-

-OCF₂-

-OCF(CF₃)-

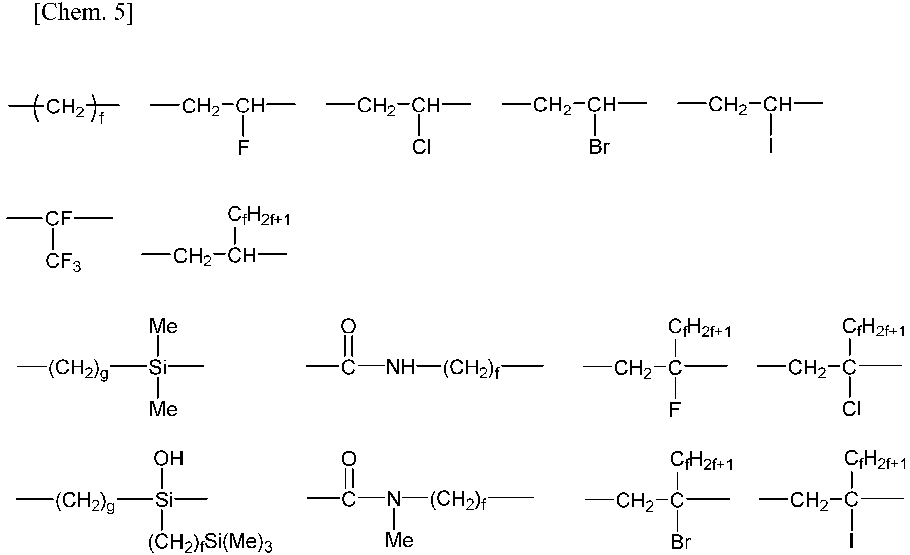

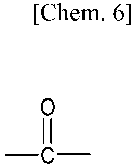

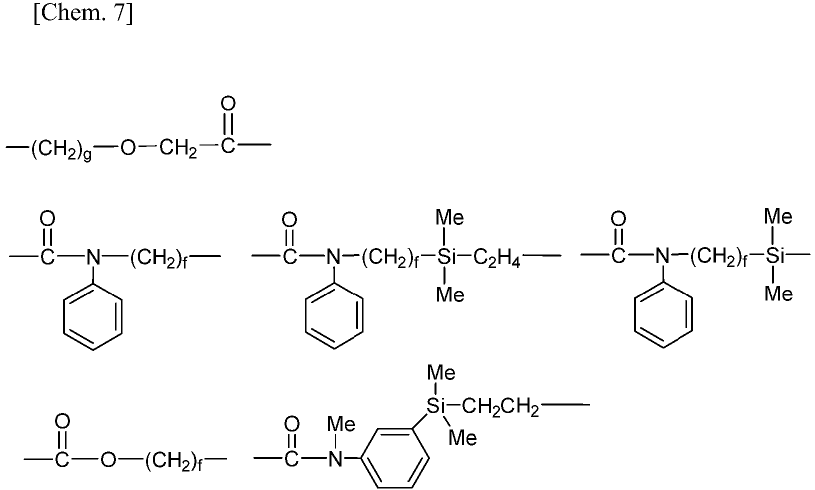

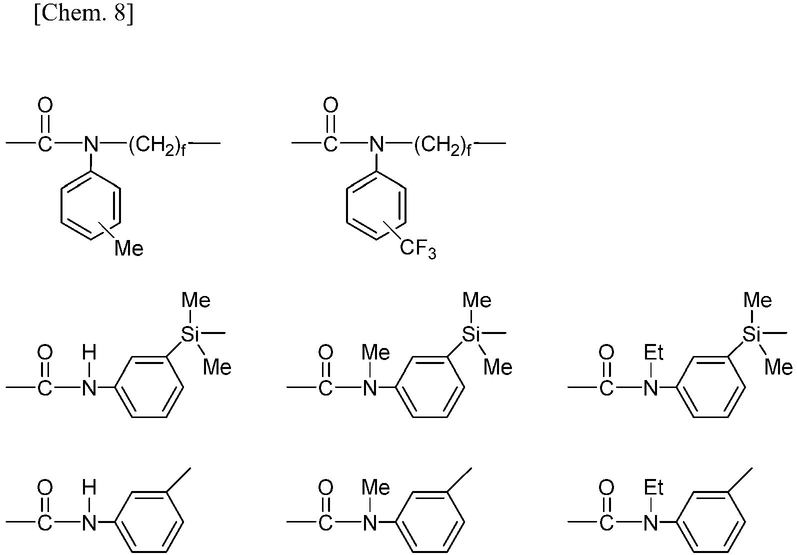

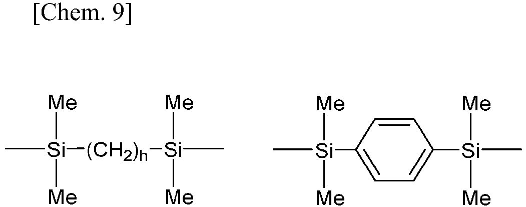

(In the formulae, f is an integer of 2 to 4, h is an integer of 2 to 6, preferably an integer of 2 to 4, u and v are each independently an integer of 1 to 4, g is an integer of 2 to 4, and Me is a methyl group.)

In formula (2), Z is independently a single bond, a nitrogen atom, a silicon atom, a carbon atom, a phosphorus atom, or a trivalent to octavalent organic group, and the trivalent to octavalent ((β+1)-valent) organic group may include at least one of a nitrogen atom, an oxygen atom, a silicon atom, a carbon atom, and a phosphorus atom. Z is specifically, for example, a single bond, a group selected from a trivalent group represented by -N=, a trivalent group represented by -P=, a trivalent group represented by -PO=, a trivalent group represented by -R¹C=, a trivalent group represented by -R³Si=, a tetravalent group represented by -C≡, a tetravalent group represented by -O-C≡, and a tetravalent group represented by -Si≡, or a trivalent to octavalent siloxane residue. U and Z are not simultaneously single bonds.

In the above, each R¹ is independently preferably an alkyl group having 1 to 3 carbon atoms, a hydroxyl group, a group having C1 to C3 oxyalkylene group repeating units between which a diorganosiloxane structure having 2 to 51 silicon atoms may be interposed, or a silyl ether group represented by R²₃SiO- wherein each R² is independently a hydrogen atom, preferably an alkyl group having 1 to 3 carbon atoms, an aryl group such as a phenyl group, or an alkoxy group having 1 to 3 carbon atoms. Each R³ is independently preferably an alkyl group having 1 to 3 carbon atoms, an alkenyl group having 2 or 3 carbon atoms, an alkoxy group having 1 to 3 carbon atoms, a hydroxyl group, or a chloro group. When Z is a siloxane residue, it preferably has a linear, branched, or cyclic organopolysiloxane structure having 2 to 51 silicon atoms, preferably 2 to 13 silicon atoms, more preferably 2 to 11 silicon atoms, still more preferably 2 to 5 silicon atoms. The organopolysiloxane preferably has a C1 to C8, more preferably C1 to C4, unsubstituted or fluorine-substituted alkyl group such as a methyl group, an ethyl group, a propyl group, a butyl group, or C₃F₇-C₃H₆-, or a phenyl group. A silalkylene structure in which two silicon atoms are bonded via an alkylene group, that is, Si-(CH₂)ₕ-Si, may also be included. In the formula, h is an integer of 2 to 6, preferably an integer of 2 to 4.

Examples of such Z include those shown below. In the following structures, the bond on the left side is preferably bonded to U, and the other bonds are preferably bonded to Y. 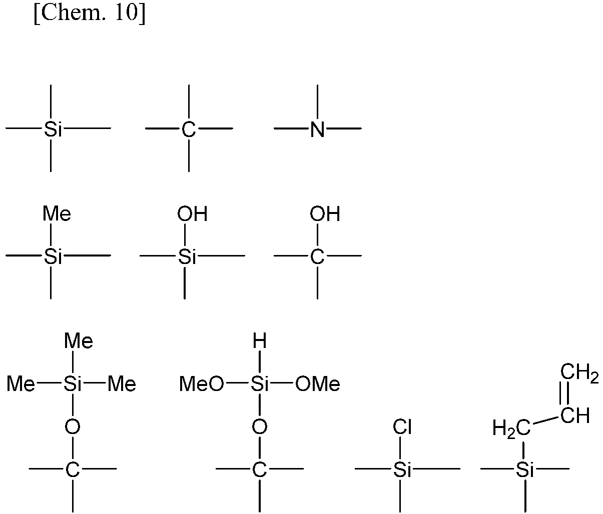 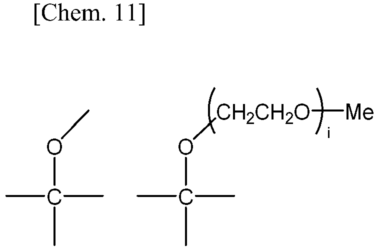 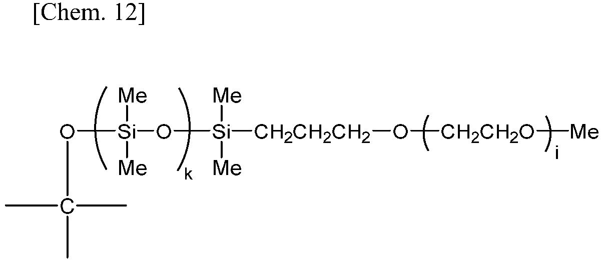 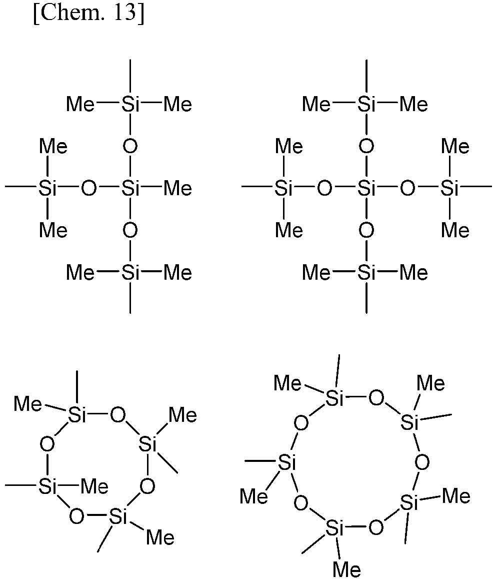 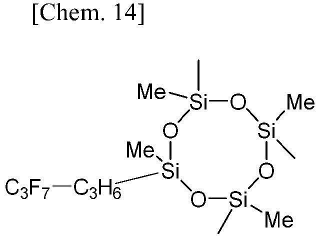 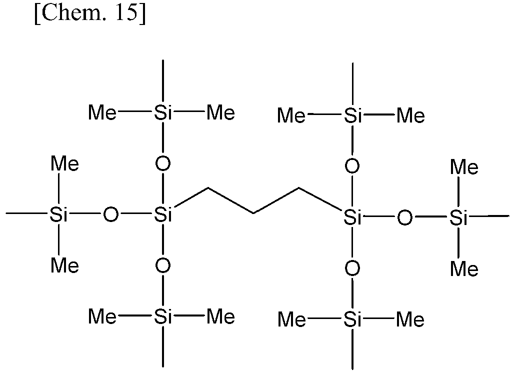 (In the formulae, i is an integer of 1 to 20, k is an integer of 1 to 50, and Me is a methyl group.)

In formula (2), each Y is independently a single bond or a divalent organic group, and the divalent organic group is preferably a linking group that has one or more structures selected from the group consisting of -C(=O)-NR'- (R' is a hydrogen atom, a methyl group, or a phenyl group), an ether bond, a carbonyl bond, an ester bond, and a group represented by a diorganosilylene group such as a dimethylsilylene group and that may include an unsubstituted or substituted divalent hydrocarbon group having 2 to 12 carbon atoms; examples of the unsubstituted or substituted divalent hydrocarbon group having 2 to 12 carbon atoms include alkylene groups such as an ethylene group, a propylene group (a trimethylene group, a methylethylene group), a butylene group (a tetramethylene group, a methylpropylene group), a hexamethylene group, and an octamethylene group, arylene groups such as a phenylene group, and combinations of two or more of these groups (e.g., alkylene-arylene groups).

When Z is a single bond, Y is preferably a single bond.

Examples of Y include groups represented by the following structures. In the following structures, the bond on the left side is preferably bonded to Z, and the bond on the right side is preferably bonded to X. 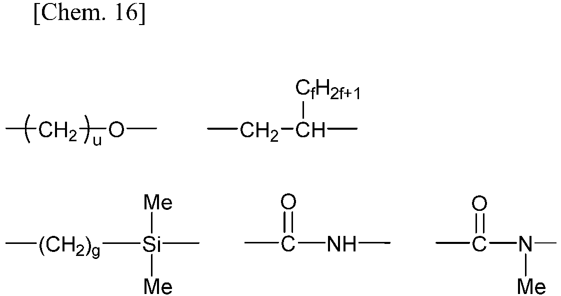 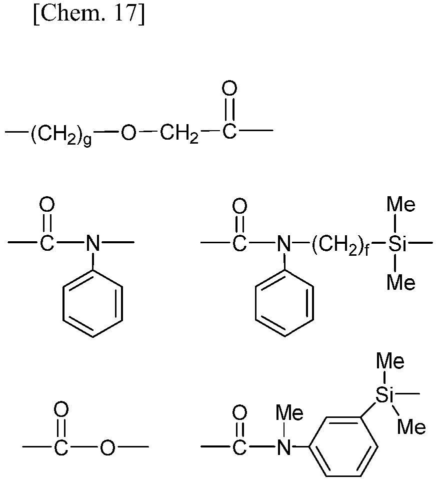 (In the formulae, f is an integer of 2 to 4, u is an integer of 1 to 4, g is an integer of 2 to 4, and Me is a methyl group.)

In formula (2), X is independently an alkenyl group, preferably having 2 to 8 carbon atoms, particularly 2 to 6 carbon atoms, and having a CH₂=CH- structure, and examples thereof include a vinyl group, an allyl group, a propenyl group, an isopropenyl group, a butenyl group, and a hexenyl group, among which a vinyl group and an allyl group are particularly preferred.

In formula (2), β is an integer of 1 to 7, preferably an integer of 1 to 3, more preferably 1.

Examples of the perfluoro compound represented by formula (2) include the following. 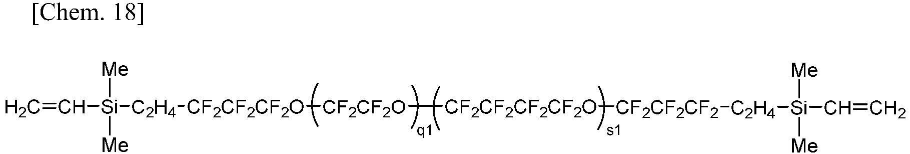 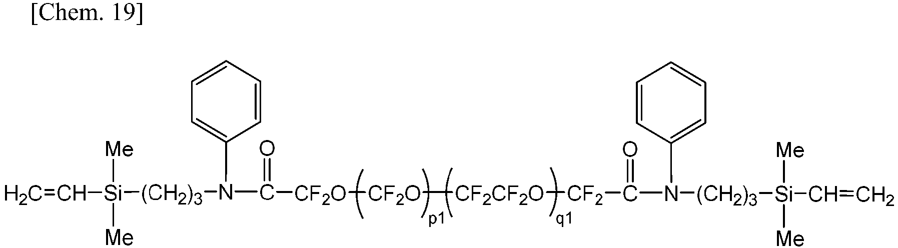 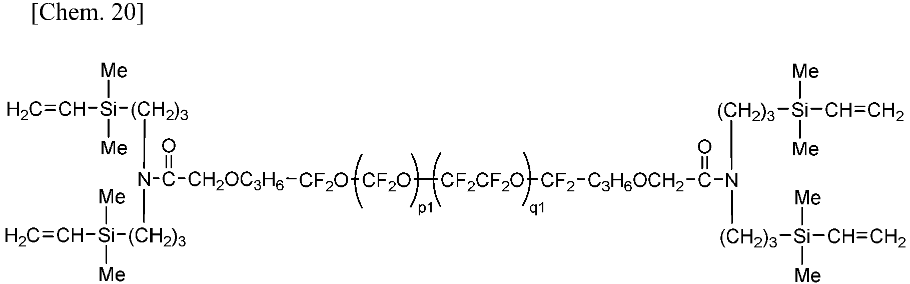 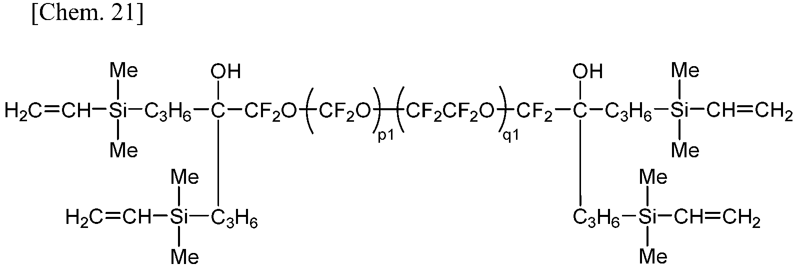 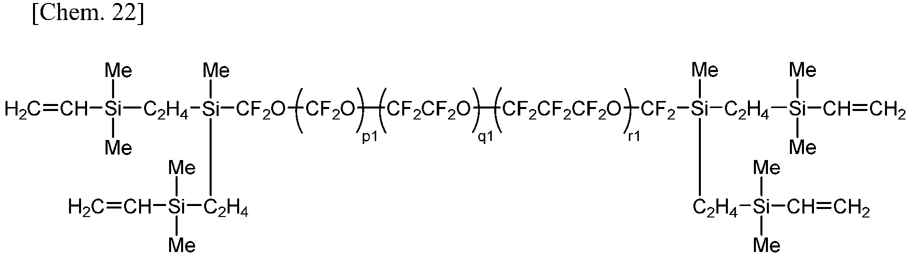 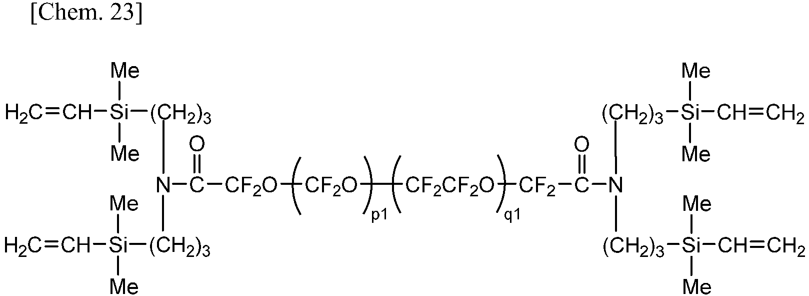 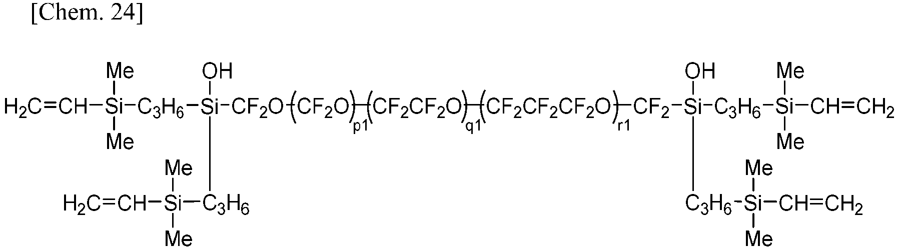 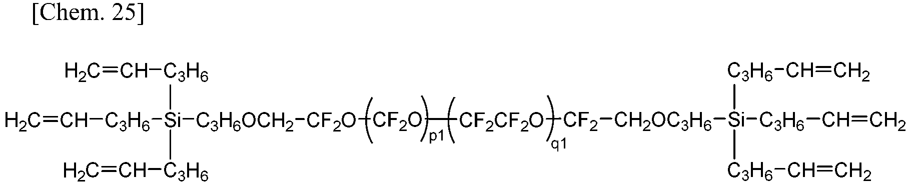 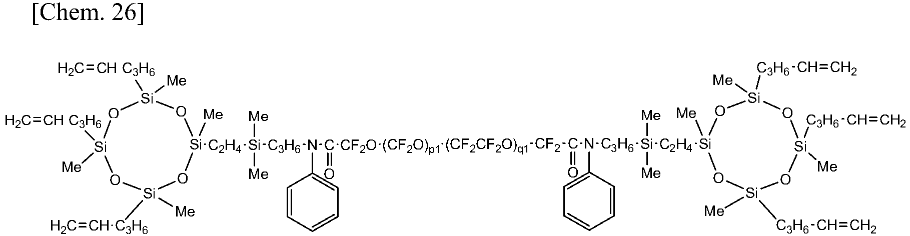 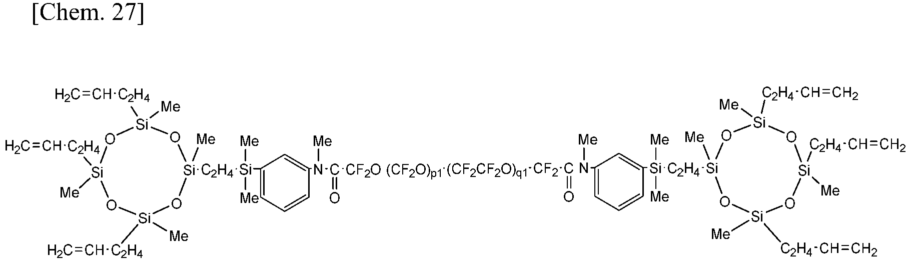 (In the formulae, p1, q1, r1, and s1 are each independently an integer of 1 to 200, and the sum of p1, q1, r1, and s1 is 3 to 300. The repeating units indicated in parentheses may be randomly bonded. Me is a methyl group.) 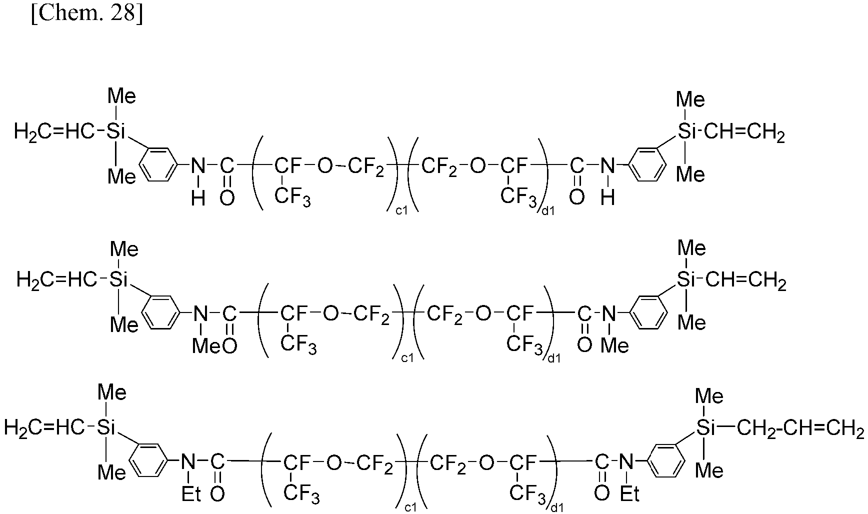 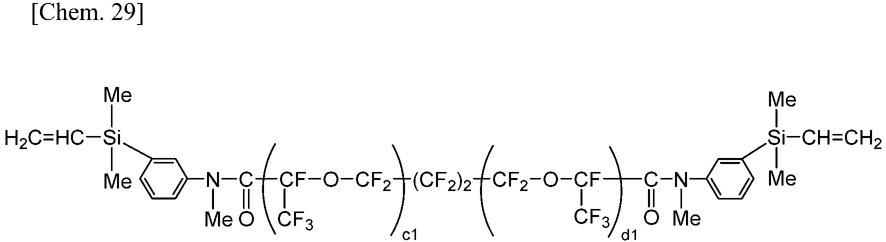 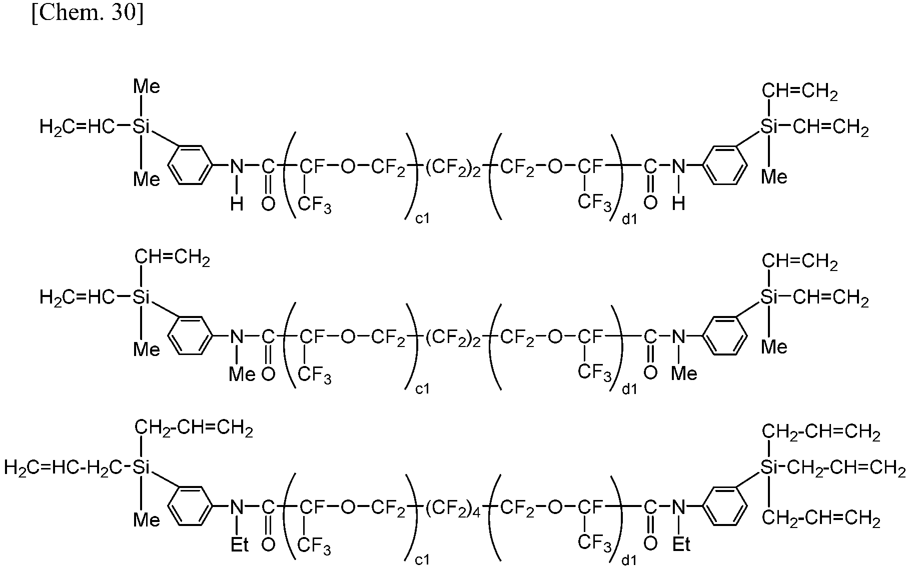 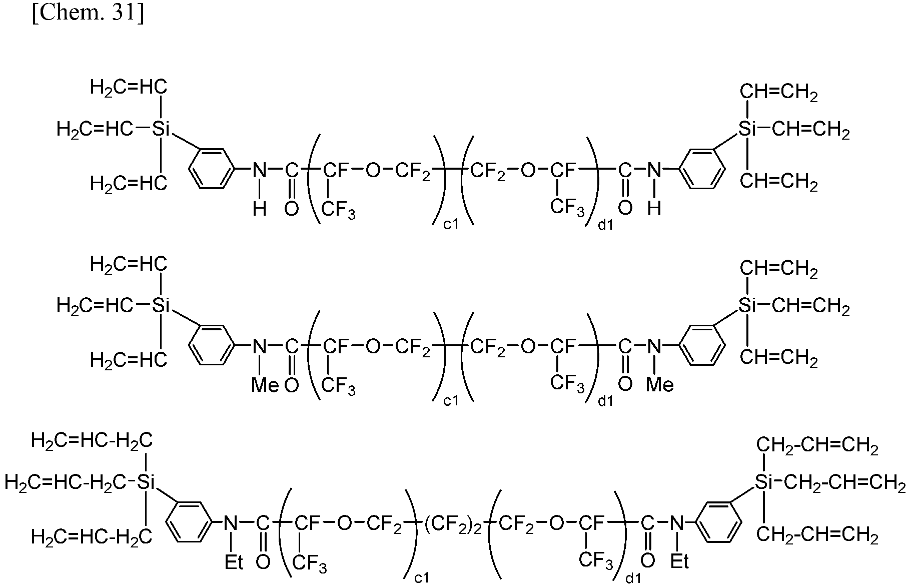 (In the formulae, c1 and d1 are each an integer of 1 to 150, and the sum of c1 and d1 is 2 to 300. The repeating units indicated in parentheses may be randomly bonded. Me is a methyl group, and Et is an ethyl group.) 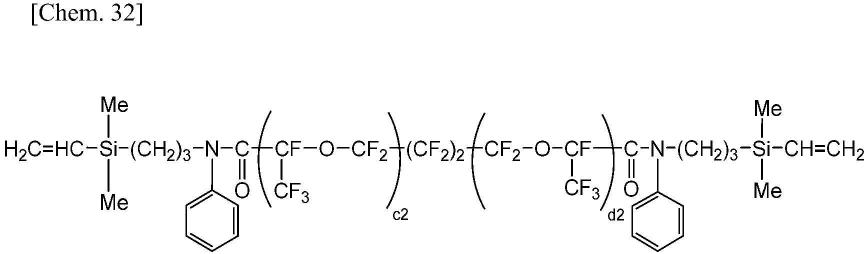 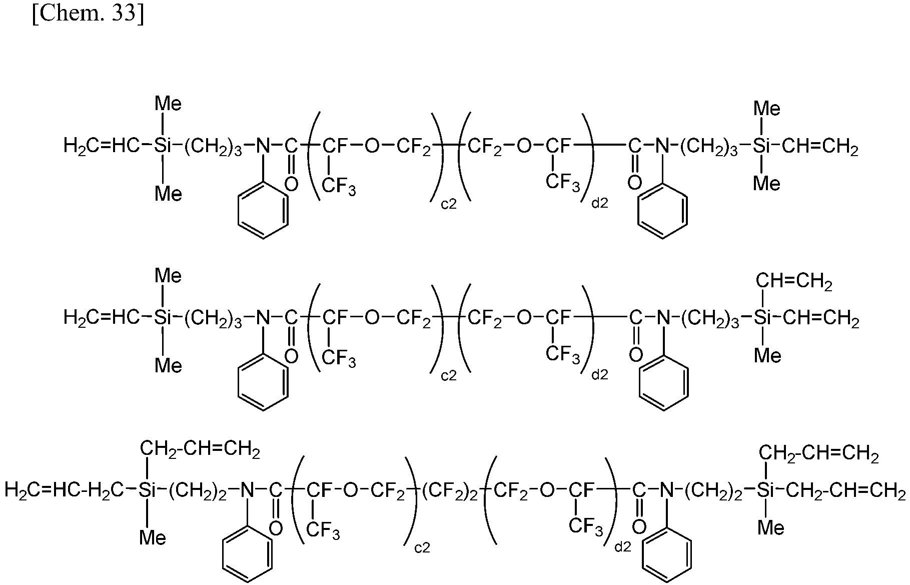 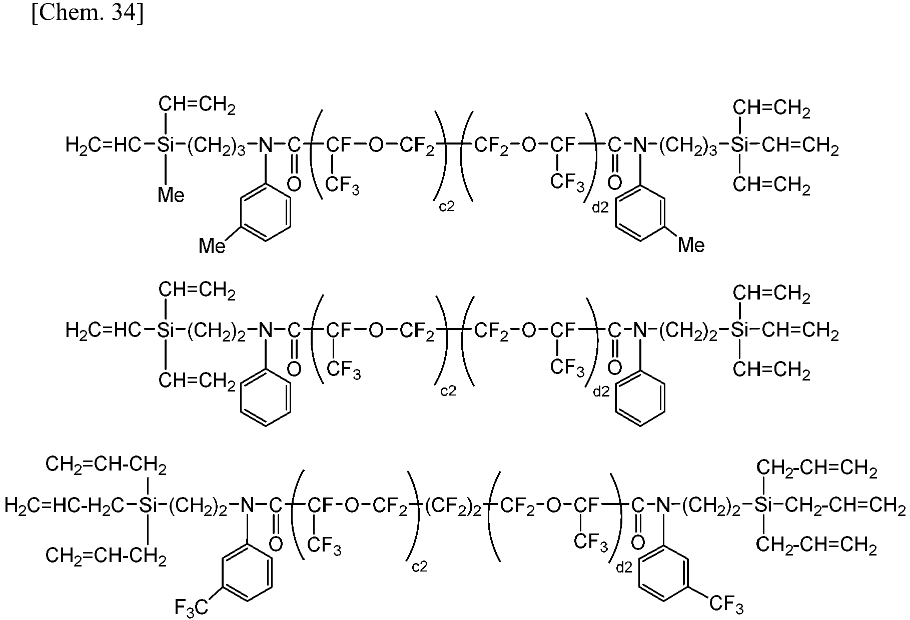 (In the formulae, c2 and d2 are each an integer of 1 to 150, and the sum of c2 and d2 is 2 to 300. The repeating units indicated in parentheses may be randomly bonded. Me is a methyl group.)

The kinematic viscosity at 25°C of the perfluoro compound as component (I) is preferably 25 to 1,000,000 mm²/s, more preferably 100 to 100,000 mm²/s. When the kinematic viscosity is less than 25 mm²/s, component (A) cannot always be obtained in a raw rubber-like form, and when the kinematic viscosity is more than 1,000,000 mm²/s, handling properties in preparing component (A) may be significantly poor. The kinematic viscosity is measured using a Cannon-Fenske viscometer by the method described in JIS Z 8803: 2011.

Component (I) may be used alone, or may be used in combination of two or more.

### < (II): Organosilicon compound having at least two SiH groups in molecule >

Component (II) is an organosilicon compound having at least two SiH groups in the molecule, preferably an organosilicon compound represented by the following general formula (3). 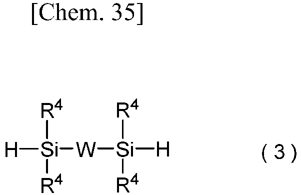 (In the formula, R⁴ is independently an unsubstituted or substituted monovalent hydrocarbon group containing no aliphatic unsaturated bond. W is a divalent organic group.)

In formula (3), R⁴ is independently an unsubstituted or substituted monovalent hydrocarbon group containing no aliphatic unsaturated bond, preferably having 1 to 10 carbon atoms, more preferably 1 to 8 carbon atoms, and specific examples thereof include alkyl groups such as a methyl group, an ethyl group, a propyl group, and a butyl group, aryl groups such as a phenyl group and a tolyl group, aralkyl groups such as a benzyl group, and groups derived by substituting some or all of the hydrogen atoms of these groups with, for example, halogen atoms, such as a trifluoropropyl group, among which a methyl group is preferred.

In formula (3), W is a divalent organic group, preferably a group represented by any of the following formulae (i) to (iii). 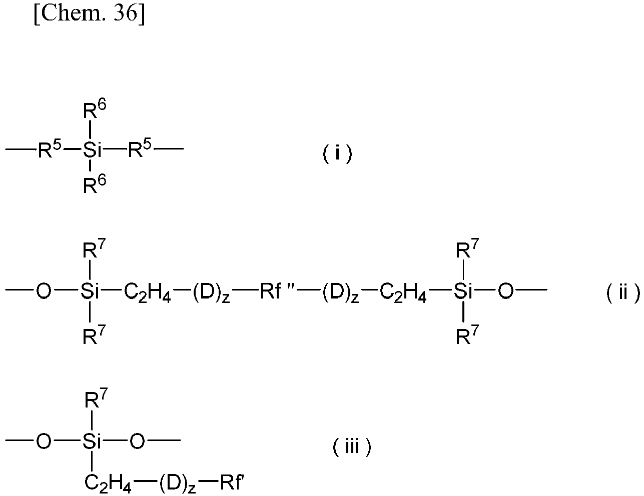
[In the formulae, Rf" is a perfluoroalkylene group or a divalent perfluoropolyether group, R⁵ is independently an oxygen atom or an unsubstituted or substituted divalent hydrocarbon group, R⁶ is independently an unsubstituted or substituted monovalent hydrocarbon group, R⁷ is an unsubstituted or substituted monovalent hydrocarbon group or a dimethylsiloxy group, D is independently -CH₂-, -CH₂O-, -CH₂OCH₂-, -E-NR⁸SO₂-, or -E-NR⁸-CO-(E is -CH₂- or a group represented by the following formula: 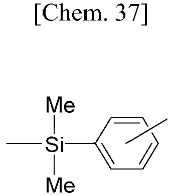
(in the formula, Me is a methyl group), and
R⁸ is a hydrogen atom or an unsubstituted or substituted monovalent hydrocarbon group), Rf' iis a monovalent perfluoropolyether group or a perfluoroalkyl group, and z is independently 0 or 1.]

In formula (i), R⁵ is independently an oxygen atom or an unsubstituted or substituted divalent hydrocarbon group, and the unsubstituted or substituted divalent hydrocarbon group is preferably one having 1 to 8 carbon atoms; examples thereof include alkylene groups such as a methylene group, an ethylene group, a propylene group (a trimethylene group, a methylethylene group), a butylene group (a tetramethylene group, a methylpropylene group), a hexamethylene group, and an octamethylene group, cycloalkylene groups such as a cyclopropylene group, a cyclobutylene group, a cyclopentylene group, a cyclohexylene group, a cyclooctylene group, a cyclononylene group, and a cyclodecylene group, arylene groups such as a phenylene group, combinations of two or more of these groups (e.g., alkylene-arylene groups), and groups derived by substituting some of the hydrogen atoms of these groups with, for example, halogen atoms. R⁵ is preferably an oxygen atom or a methylene group.

In formula (i), R⁶ is independently an unsubstituted or substituted monovalent hydrocarbon group, preferably having 1 to 20 carbon atoms, more preferably 1 to 10 carbon atoms, and specific examples thereof include alkyl groups such as a methyl group, an ethyl group, a propyl group, and a butyl group, alkenyl groups such as a vinyl group and an allyl group, aryl groups such as a phenyl group and a tolyl group, aralkyl groups such as a benzyl group, and groups derived by substituting some or all of the hydrogen atoms of these groups with, for example, halogen atoms, such as a trifluoropropyl group, a C₃F₇C₂H₄- group, a C₄F₉C₂H₄- group, a CH₂=CHC₃F₆C₂H₄- group, and a CH₂=CHC₄F₈C₂H₄- group, among which a methyl group, a C₄F₉C₂H₄- group, and a CH₂=CHC₄F₈C₂H₄- group are preferred.

In formula (ii), Rf" is a perfluoroalkylene group or a divalent perfluoropolyether group, and examples thereof are the same as those of Rf in formula (2) described above. Rf" is preferably a perfluoroalkylene group, particularly preferably a -CF₂CF₂CF₂CF₂-group.

In formulae (ii) and (iii), R⁷ is an unsubstituted or substituted monovalent hydrocarbon group or a dimethylsiloxy group, and examples of the unsubstituted or substituted monovalent hydrocarbon group are the same as those of the unsubstituted or substituted monovalent hydrocarbon group represented by R⁶ described above. R⁷ is preferably a methyl group, a C₄F₉C₂H₄- group, or a CH₂=CHC₄F₈C₂H₄- group.

In formulae (ii) and (iii), D is independently -CH₂-, -CH₂O-, -CH₂OCH₂-, -E-NR⁸SO₂-, or -E-NR⁸-CO- (E is -CH₂- or a group represented by the following formula: 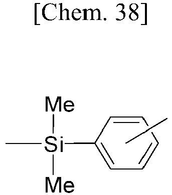
(in the formula, Me is a methyl group), and
R⁸ is a hydrogen atom or an unsubstituted or substituted monovalent hydrocarbon group).

Here, R⁸ is a hydrogen atom or an unsubstituted or substituted monovalent hydrocarbon group, and examples of the unsubstituted or substituted monovalent hydrocarbon group are the same as those of the unsubstituted or substituted monovalent hydrocarbon group represented by R⁶ described above. R⁸ is preferably a methyl group, an ethyl group, a trifluoromethyl group, a trifluoroethyl group, a pentafluoroethyl group, a phenyl group, or a pentafluorophenyl group.

In formulae (ii) and (iii), z is independently 0 or 1, preferably 0.

In formula (iii), Rf' is a monovalent perfluoropolyether group or a perfluoroalkyl group, preferably a perfluoroalkyl group.

Preferred examples of the monovalent perfluoropolyether group include groups represented by the following formulae. 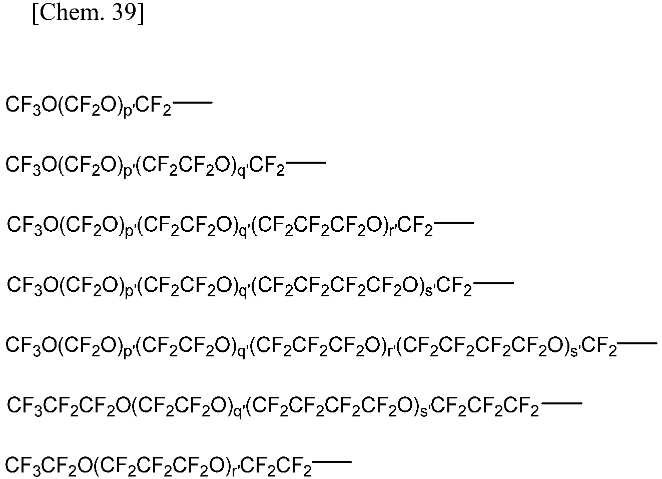 (In the formulae, p', q', r', and s' are each an integer of 1 or more, and the sum of p', q', r', and s' is 2 to 300. The repeating units indicated in parentheses with p', q', r', and s' may be randomly bonded.)

The perfluoroalkyl group is preferably CₙF₂ₙ₊₁ (n is an integer of 1 to 6, preferably an integer of 2 to 4), and examples thereof include those shown below.

CF₃-

CF₃CF₂-

CF₃CF₂CF₂-

CF₃CF₂CF₂CF₂-

CF₃CF₂CF₂CF₂CF₂-

CF₃CF₂CF₂CF₂CF₂CF₂-

Specific examples of the organosilicon compound represented by formula (3) wherein W is formula (i) include those shown below. 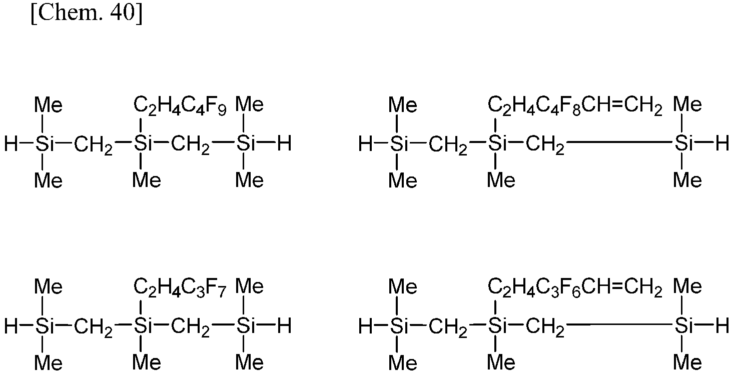 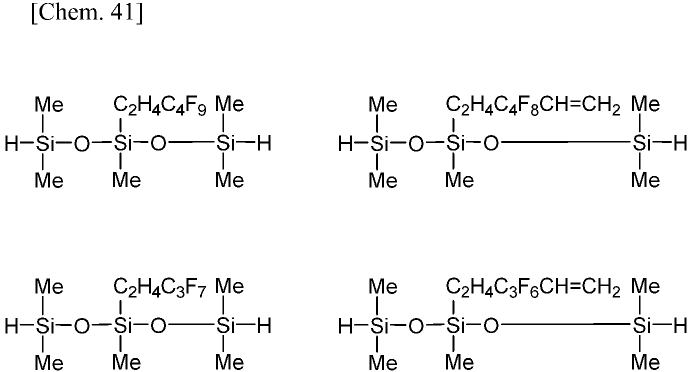 (In the formulae, Me is a methyl group.)

Specific examples of the organosilicon compound represented by formula (3) wherein W is formula (ii) include those shown below. 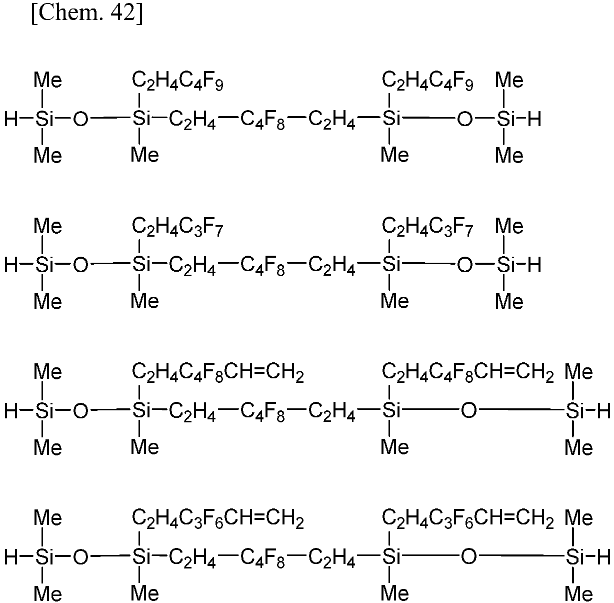 (In the formulae, Me is a methyl group.)

Specific examples of the organosilicon compound represented by formula (3) wherein W is formula (iii) include those shown below. 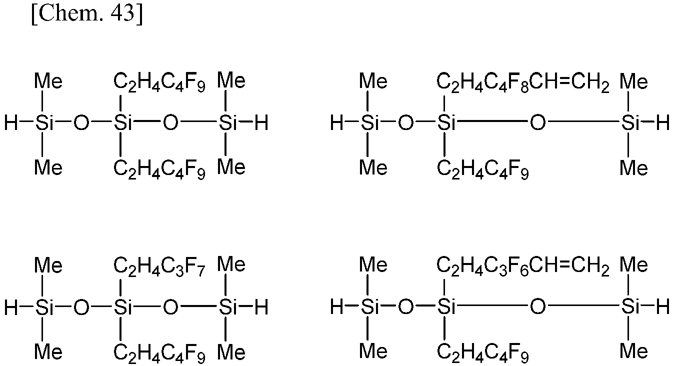 (In the formulae, Me is a methyl group.)

Component (II) may be used alone, or may be used in combination of two or more.

Component (II) for use is preferably one having an alkenyl group in the molecule, more preferably a combination of one having an alkenyl group in the molecule and one having no alkenyl group in the molecule. When one having an alkenyl group in the molecule and one having no alkenyl group in the molecule are used in combination, they are preferably used in amounts such that the molar ratio between the one having an alkenyl group and the one having no alkenyl group is 99:1 to 1:99, particularly 80:20 to 20:80.

### < (A): Preparation of addition reaction product >

The addition reaction product as component (A) is obtained by an addition reaction (hydrosilylation reaction) between the alkenyl groups in component (I) and the SiH groups in component (II). Specifically, the addition reaction product as component (A) can be prepared by adding a hydrosilylation reaction catalyst to a mixture of component (I) and component (II) to cause a hydrosilylation reaction.

The reaction ratio between component (I) and component (II) is preferably such that the amount of the SiH groups in component (II) relative to 1 mol of the alkenyl groups in component (I) is 1.00 to 2.00 mol, more preferably 1.01 to 1.50 mol. When the amount is less than 1.00 mol, the resulting component (A) cannot always be obtained in a raw rubber-like form, and when the amount is more than 2.00 mol, a cured product of the resulting composition may have low heat resistance.

The hydrosilylation reaction catalyst, which is generally a noble metal (particularly, a platinum group metal) or a compound thereof, is expensive, and thus platinum or a platinum compound which is relatively readily available is often used.

Examples of the platinum compound include chloroplatinic acid; complexes of chloroplatinic acid with olefins such as ethylene; complexes of chloroplatinic acid with alcohols or vinylsiloxanes; and metallic platinum supported on silica, alumina, carbon, and the like. As hydrosilylation reaction catalysts other than platinum and platinum compounds, rhodium-, ruthenium-, iridium-, and palladium-based compounds are also known, and examples thereof include RhCl(PPh₃)₃, RhCl(CO)(PPh₃)₂, Ru₃(CO)₁₂, IrCl(CO)(PPh₃)₂, and Pd(PPh₃)₄. In the formulae, Ph is a phenyl group.

Regarding the use of such a catalyst, when it is a solid catalyst, it can be used in solid form, but in order to obtain a more uniform cured product, it is preferable to use a solution of chloroplatinic acid or a complex in an appropriate solvent such as toluene or ethanol.

The hydrosilylation reaction catalyst may be used alone, or may be used in combination of two or more.

The amount of these catalysts used is not particularly limited, and a desired curing rate can be achieved with a catalytic amount; however, from an economic standpoint or in order to obtain a good cured product, the amount (in terms of the weight of platinum group metal atoms), relative to the total weight of components (I) and (II), is typically 0.1 to 2,000 ppm, preferably 0.1 to 500 ppm, particularly preferably 0.5 to 200 ppm, and can be appropriately increased or decreased depending on the desired curing rate.

Conditions for the above addition reaction (hydrosilylation reaction) can be appropriately selected. The reaction may be performed at room temperature, and can be performed at an elevated temperature of 50°C to 200°C in order to accelerate the reaction. The reaction time can be 10 minutes to 12 hours, particularly 1 hour to 2 hours.

The addition reaction product as component (A) obtained by the above method preferably has, in the molecule, an alkenyl group derived from component (II). The alkenyl group amount is preferably 5.0×10⁻⁵ to 1.2×10⁻² mol/100 g, more preferably 1.0×10⁻⁴ to 1.0×10⁻² mol/100 g. When the alkenyl group amount is too small, a cured product of the resulting composition may have low heat resistance, and when it is too large, the resulting composition may have significantly poor roll processability. The alkenyl group amount can be measured by ¹H-NMR, FT-IR, or the like.

The addition reaction product as component (A) obtained by the above method preferably has a 10 wt% HFE-7200 (Novec (registered trademark), manufactured by 3M Company) solution kinematic viscosity at 25°C of 1 to 100 mm²/s, more preferably 5 to 50 mm²/s. When the solution kinematic viscosity is too low, the resulting composition may have significantly poor roll processability, and when it is too high, component (B) may be poorly dispersed in component (A). The solution kinematic viscosity can be measured using a Cannon-Fenske viscometer by the method described in JIS Z 8803:2011. Since the addition reaction product as component (A) has a gum-like appearance, viscosity measurement using a rotational viscometer or the like may be difficult, and measurement using the solution kinematic viscosity is preferred.

### [Component (B)]

Component (B) is a reinforcing filler. Examples of the reinforcing filler include reinforcing or semi-reinforcing fillers such as a silica-based reinforcing filler, quartz powder, fused quartz powder, diatomaceous earth, and calcium carbonate. The silica-based reinforcing filler may be silica powder such as aerosol silica (fumed silica or dry silica), precipitated silica (wet silica), spherical silica (fused silica), sol-gel silica, or silica aerogel, or silica powder (surface-treated silica powder) obtained by treating a surface of the above silica powder with an organochlorosilane, an organodisilazane, a cyclic organopolysilazane or the like of various types. Furthermore, the silica-based reinforcing filler may also be silica powder obtained by retreating the surface-treated silica powder with an organosilane or organosiloxane having a monovalent perfluoroalkyl group or a monovalent perfluorooxyalkyl group. Of these, as component (B), fumed silica is particularly preferred from the viewpoint of improving mechanical strength of the resulting cured product and improving dispersion stability of the composition, and fumed silica treated with a silicon compound-based surface treatment agent such as a silane is preferred from the viewpoint of improving dispersibility.

Examples of the silicon compound-based surface treatment agent include organochlorosilanes such as dimethyldichlorosilane, trimethylchlorosilane, methyltrichlorosilane, vinyldimethylchlorosilane, divinylmethylchlorosilane, and trivinylchlorosilane; silane compounds having a hydrolyzable group, such as organoalkoxysilanes such as dimethyldimethoxysilane, trimethylmethoxysilane, methyltrimethoxysilane, vinyldimethylmethoxysilane, divinylmethylmethoxysilane, trivinylmethoxysilane, dimethyldiethoxysilane, trimethylethoxysilane, methyltriethoxysilane, vinyldimethylethoxysilane, divinylmethylethoxysilane, and trivinylethoxysilane; organodisilazanes such as hexamethyldisilazane, 1,3-divinyl-1,1,3,3-tetramethyldisilazane, 1,3-diphenyl-1,1,3,3-tetramethyldisilazane, heptamethyldisilazane, and 1,3-bis(chloromethyl)-1,1,3,3-tetramethyldisilazane; and cyclic organopolysilazanes such as 1,3,5-trimethyl-1,3,5-trivinylcyclotrisilazane and 1,1,3,3,5,5-hexamethylcyclotrisilazane, and in particular, organochlorosilanes such as dimethyldichlorosilane and trimethylchlorosilane, which are silicon compounds having a hydrolyzable group, silazane compounds such as hexamethyldisilazane, and cyclic silazanes such as hexamethylcyclotrisilazane, and the like are preferred.

In this hydrophobization treatment, the silica powder obtained by treating a surface of silica using a surface treatment agent is preferably directly treated in a powder state in advance, and as a typical treatment method, a generally known technique can be employed. For example, the untreated silica powder and a treatment agent are placed into a mechanical kneading apparatus sealed under normal pressure or into a fluidized bed, subjected to a mixing treatment at room temperature or under heating, if necessary, in the presence of an inert gas optionally using a catalyst and water for promoting hydrolysis, kneaded, and then dried, whereby the silica powder can be prepared. The amount of the surface treatment agent blended may be any amount equal to or more than an amount computed from an area that the surface treatment agent can cover on the surface of the silica powder.

The specific surface area of the silica powder measured by a BET method is preferably 50 m²/g or more to improve mechanical properties, and is preferably 300 m²/g or less because otherwise the viscosity increase at the time of blending of the silica powder into the composition may be large, making the blending difficult.

Component (B) may be used alone, or may be used in combination of two or more.

In the present invention, the reinforcing filler as component (B) preferably has a bulk density of 30 to 180 g/L, particularly 40 to 150 g/L. When the bulk density of the hydrophobic silica powder is less than 30 g/L, the resulting composition may have an increased viscosity, thus making the blending difficult, and when the bulk density is more than 180 g/L, the reinforcing effect may be insufficient. In the present invention, the bulk density is measured by a tapping method or the like.

When this reinforcing filler is subjected to hydrophobization treatment, the degree of hydrophobization, in terms of a surface carbon amount (carbon content: wt%) in the entire hydrophobic silica powder after treatment, is preferably in the range of 0.1 to 20 wt%, more preferably in the range of 0.5 to 10 wt%. When the surface carbon amount is less than 0.1 wt%, uniform kneading with component (A) may be difficult, and when the surface carbon amount is more than 20 wt%, a cured product of the resulting composition may be provided with insufficient mechanical strength. In the present invention, the surface carbon amount is measured by a known elemental analysis method.

When the reinforcing filler as component (B) has an alkenyl group in the surface carbon after treatment, the surface alkenyl group amount is preferably in the range of 1.0×10⁻³ to 2.0×10⁻² mol/100 g, more preferably in the range of 1.5×10⁻³ to 1.5×10⁻² mol/100 g. When the surface alkenyl group amount is more than 2.0 × 10⁻² mol/100 g, uniform kneading with component (A) may be difficult. In the present invention, the surface alkenyl group amount is measured by FT-IR.

The amount of the reinforcing filler blended, relative to 100 parts by weight of component (A), is preferably 10 to 60 parts by weight, more preferably 15 to 50 parts by weight. When the amount is less than 10 parts by weight, mechanical strength of the resulting cured product may be insufficient, and when the amount is more than 60 parts by weight, the cured product may be brittle and may have low mechanical strength.

The perfluoropolyether-based fluororubber mixture (a) can be obtained by mixing predetermined amounts of components (A) and (B) according to a conventional method.

### [Component (b): Organopolysiloxane]

The organopolysiloxane as component (b) acts as a roll processability improver in the peroxide-crosslinked fluororubber composition according to the present invention, and is preferably represented by the following average compositional formula (1).

(R¹¹)ₓSiO_{(4-x)/2} (1)

(In the formula, R¹¹ is an unsubstituted or substituted monovalent hydrocarbon group, and x is a number satisfying 1.85 < x < 2.10.)

In formula (1), R¹¹ is an unsubstituted or substituted monovalent hydrocarbon group, preferably having 1 to 10 carbon atoms, more preferably 1 to 8 carbon atoms, and specific examples thereof include alkyl groups such as a methyl group, an ethyl group, a propyl group, and a butyl group, alkenyl groups such as a vinyl group and an allyl group, aryl groups such as a phenyl group and a tolyl group, aralkyl groups such as a benzyl group, and groups derived by substituting some or all of the hydrogen atoms of these groups with, for example, halogen atoms, such as a trifluoropropyl group, among which a methyl group and a vinyl group are preferred.

The organopolysiloxane as component (b) may have a hydroxy group bonded to a silicon atom at a molecular chain terminal.

In formula (1), x is a number satisfying 1.85 < x < 2.10.

In the present invention, the degree of polymerization of the organopolysiloxane as component (b) is not particularly limited, and is, for example, 2 to 10,000. In the present invention, the degree of polymerization (or molecular weight) can be determined, for example, as a polystyrene-equivalent number-average degree of polymerization (or number-average molecular weight) by gel permeation chromatography (GPC) analysis using toluene, tetrahydrofuran (THF), or the like as an eluent.

The viscosity of the organopolysiloxane as component (b) is not particularly limited, and for example, the 30 wt% toluene solution viscosity at 25°C (the viscosity of a solution obtained by dissolving the organopolysiloxane in toluene at 30 wt%) is preferably 1 to 100,000 mPa·s. In the present invention, the viscosity is measured using a rotational viscometer by the method described in JIS Z 8803: 2011.

Specific examples of the organopolysiloxane as component (b) include compounds represented by the following general formulae. 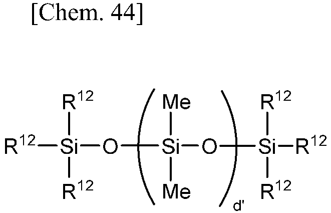
(In the formula, d' is an integer of 1 or more, preferably an integer of 1,000 or more, more preferably an integer of 2,000 or more, particularly preferably an integer of 3,000 to 10,000. A plurality of R¹²'s may be the same or different and are each a methyl group, a vinyl group, or a hydroxy group. Me is a methyl group.) 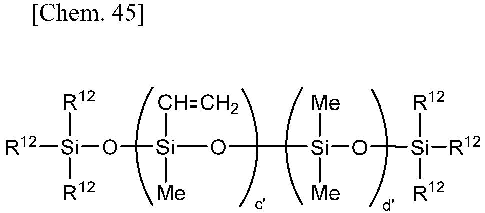
(In the formula, c' is an integer of 1 or more, d' is an integer of 1 or more, and c' + d' is preferably an integer of 1,000 or more, more preferably an integer of 2,000 or more, particularly preferably an integer of 3,000 to 10,000, provided that c' and d' are values such that the proportion of -CH=CH₂ groups in all organic groups bonded to silicon atoms is 0.01 to 15 mol%. A plurality of R¹²'s may be the same or different and are each a methyl group, a vinyl group, or a hydroxy group. Me is a methyl group.) 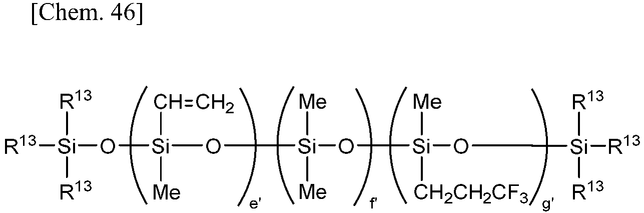
(In the formula, e' is an integer of 1 or more, f' is an integer of 1 or more, g' is an integer of 1 or more, and e' + f' + + g' is preferably an integer of 1,000 or more, more preferably an integer of 2,000 or more, particularly preferably an integer of 3,000 to 10,000, provided that e', f', and g' are values such that the proportion of -CH=CH₂ groups in all organic groups bonded to silicon atoms is 0.01 to 15 mol%. A plurality of R¹³'s may be the same or different and are each a methyl group, a vinyl group, a 3,3,3-trifluoropropyl group, or a hydroxy group. Me is a methyl group.) 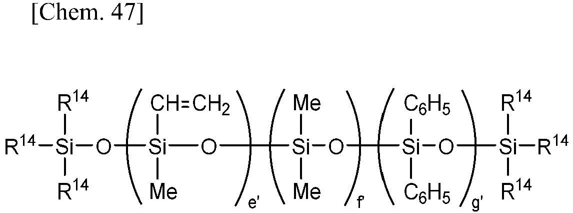
(In the formula, e' is an integer of 1 or more, f' is an integer of 1 or more, g' is an integer of 1 or more, and e' + f' + + g' is preferably an integer of 1,000 or more, more preferably an integer of 2,000 or more, particularly preferably an integer of 3,000 to 10,000, provided that e', f', and g' are values such that the proportion of -CH=CH₂ groups in all organic groups bonded to silicon atoms is 0.01 to 15 mol%. A plurality of R¹⁴'s may be the same or different and are each a methyl group, a vinyl group, a phenyl group, or a hydroxy group. Me is a methyl group.)

The organopolysiloxane as component (b) can be produced by a known method, and is produced, for example, by subjecting a cyclic polysiloxane (a trimer or tetramer of siloxane) obtained by (co)hydrolysis of one or more organohalosilanes to ring-opening polymerization in the presence of a basic catalyst or an acidic catalyst.

In the present invention, the kneading ratio, in terms of volume ratio, between component (a) and component (b) is (a):(b) = 95:5 to 99:1, preferably 95.1:4.9 to 98.8:1.2, more preferably 95.5:4.5 to 98.5:1.5. When the volume ratio of component (a) is less than 95, chemical resistance and solvent resistance are insufficient. When the volume ratio of component (a) is more than 99, roll processability is insufficient. The volume ratio can be determined from densities of component (a) and component (b) calculated by the method described in JIS K 6249:2003.

### [Peroxide crosslinker]

To cure the peroxide-crosslinked fluororubber composition according to the present invention, a peroxide crosslinker can be used.

The peroxide crosslinker is not particularly limited, and examples thereof include dibenzoyl peroxide, dicumyl peroxide, di-t-butyl peroxide, t-butyl peroxyacetate, t-butyl peroxybenzoate, t-butyl peroxyisopropyl monocarbonate, and 2,5-dimethyl-2,5-di-t-butylperoxyhexane. From the viewpoint of storage stability and anti-scorching, 2,5-dimethyl-2,5-di-t-butylperoxyhexane is preferred.

The amount of the peroxide crosslinker added may be any amount sufficient to cure the components of the peroxide-crosslinked fluororubber composition according to the present invention, and when component (A) or component (b) contains an alkenyl group, the amount, relative to 100 parts by weight of the total of component (A) and component (b), is preferably 0.1 to 10 parts by weight, particularly 0.5 to 5 parts by weight. When the amount is less than 0.1 parts by weight, crosslinking may be insufficient or slow, and when the amount is more than 10 parts by weight, physical properties may be adversely affected.

### [Other components]

For higher practicality, the peroxide-crosslinked fluororubber composition according to the present invention may contain, as optional components in addition to components (a) and (b), a filler other than the reinforcing filler (B), an adhesion imparting agent, a plasticizer, a viscosity modifier, a flexibilizer, an inorganic pigment such as titanium oxide, iron oxide, carbon black, or cobalt aluminate, a heat resistance improver such as titanium oxide, iron oxide, carbon black, cerium oxide, cerium hydroxide, zinc carbonate, magnesium carbonate, or manganese carbonate, a thermal conductivity imparting agent such as alumina, boron nitride, silicon carbide, or metal powder, a conductivity imparting agent such as carbon black, silver powder, or conductive zinc white, and the like, as necessary. The amount of these additives blended may be any amount as long as the object of the present invention is not impaired.

As the plasticizer, the viscosity modifier, and the flexibilizer, non-reactive (non-functional) linear polyfluoro compounds having, in their molecules, no functional groups (alkenyl groups and hydrosilyl groups) involved in the hydrosilylation reaction and represented by the following general formulae (5) and (6) can be used.

F-(CF₂CF₂CF₂O)_{v'}-J (5)

(In the formula, J is a group represented by C_{w'}F_{2w'+1}- (w' is an integer of 1 to 3), and v' is an integer of 1 to 500, preferably an integer of 2 to 300.)

J-{(OCF(CF₃)CF₂)_{x'}-(OCF₂CF₂)_{y'}-(OCF₂)_{z'}}-O-J (6)

(In the formula, J is as defined above, and x' and y' are each an integer of 0 to 300, preferably an integer of 0 to 150, excluding the case where both x' and y' are 0. z' is an integer of 1 to 300, preferably an integer of 1 to 150. The repeating units may be randomly bonded to each other.)

Specific examples of the linear polyfluoro compound represented by general formula (5) or (6) include the following.

F-(CF₂CF₂CF₂O)_{v"}-CF₂CF₃

(v" is an integer of 1 to 200.)

CF₃-{(OCF(CF₃)CF₂)_{x"}-(OCF₂)_{z"}}-O-CF₃

(x" is an integer of 1 to 200, and z" is an integer of 1 to 200. The repeating units may be randomly bonded to each other.)

CF₃-{(OCF₂CF₂)_{y'}-(OCF₂)_{z"}}-O-CF₃

(y" is an integer of 1 to 200, and z" is an integer of 1 to 200. The repeating units may be randomly bonded to each other.)

The linear polyfluoro compound represented by general formula (5) or (6) may be used alone, or may be used in combination of two or more.

The peroxide-crosslinked fluororubber composition according to the present invention can be obtained by uniformly kneading predetermined amounts of components (a) and (b) and, as necessary, a peroxide crosslinker and other components. Regarding a kneading method, a two-roll mill, a kneader, a pressure kneader, a Banbury mixer, or the like, which is commonly used in rubber mixing, can be used. In particular, from the viewpoint of workability and productivity, a closed-type kneading machine such as a pressure kneader or a Banbury mixer is preferred. A particularly preferred kneading method is to knead component (a) and component (b) using a closed-type kneading machine and then mix a peroxide crosslinker using a two-roll mill.

The method of molding the peroxide-crosslinked fluororubber composition according to the present invention is not particularly limited, and examples thereof include press molding, compression molding, and injection molding. As curing conditions, a temperature and a time that allow a crosslinking reaction to be completed may be appropriately selected, and may be 100°C to 200°C, particularly 120°C to 170°C, and 1 minute to 2 hours, particularly 5 minutes to 1 hour. To stabilize the physical properties of this composition, it is preferable to perform secondary curing by heat treatment at 100°C to 230°C for about 1 to 24 hours. The secondary curing has little effect at less than 100°C, and may result in thermal decomposition at more than 230°C. More preferably, the secondary curing is performed at 150°C to 200°C for 1 to 20 hours.

The peroxide-crosslinked fluororubber composition according to the present invention has excellent roll processability, and furthermore, a cured product obtained therefrom is excellent in heat resistance, chemical resistance, solvent resistance, low-temperature characteristics, and the like.

### EXAMPLES

Hereinafter, the present invention will be specifically described with reference to Examples and Comparative Examples, but the present invention is not limited to the following Examples. In the following examples, the 10 wt% HFE-7200 (Novec (registered trademark), manufactured by 3M Company) solution kinematic viscosity of component (A) is measured at 25°C using an HFE-7200 (manufactured by 3M Company) solution and a Cannon-Fenske viscometer by the method described in JIS Z 8803:2011. The surface carbon amount of component (B) is measured by a known elemental analysis method, the surface alkenyl group amount is measured by FT-IR, and the bulk density is measured by a tapping method. The viscosity of component (b) is measured at 25°C using a 30 wt% toluene solution and a rotational viscometer by the method described in JIS Z 8803: 2011, and the degree of polymerization is measured by ¹H-NMR. The alkenyl group (vinyl group) amounts of component (A), component (I), and component (b) are calculated based on the results of analysis such as ¹H-NMR, and the SiH group amount of component (II) is calculated based on the results of analysis such as ¹H-NMR. Room temperature is 25°C. In formulae, Me is a methyl group.

### [Examples 1 to 5 and Comparative Examples 1 to 3]

### Components of compositions used in Examples and Comparative Examples

### [Component (a)]

(a-1): Perfluoropolyether-based fluororubber mixture obtained by blending 30 parts by weight of the following component (B) relative to 100 parts by weight of the following component (A-1)
(a-2): Perfluoropolyether-based fluororubber mixture obtained by blending 30 parts by weight of the following component (B) relative to 100 parts by weight of the following component (A-2)

### [Component (A)]

### (A-1): Addition reaction product obtained in the following manner

In a 1-liter beaker, 100 g of the following component (I-1), 0.94 g of the following component (II-1), and 2.24 g of the following component (II-2) were charged, and thoroughly mixed manually at room temperature for 10 minutes using a stirring rod, after which 0.2 g of a hydrosilylation reaction catalyst (trade name: CAT-PL-50T, manufactured by Shin-Etsu Chemical Co., Ltd.) (platinum content 0.2 wt%) was added, followed by further mixing for 15 minutes. Thereafter, the mixture was heated at 100°C for 1 hour to obtain an addition reaction product (10 wt% HFE-7200 (Novec (registered trademark), manufactured by 3M Company) solution kinematic viscosity: 10 mm²/s; alkenyl group content: 4.1×10⁻³ mol/100 g).

### (A-2): Polymer obtained in the following manner

In a 1-liter beaker, 100 g of the following component (I-2), 0.94 g of the following component (II-1), and 2.24 g of the following component (II-2) were charged, and thoroughly mixed manually at room temperature for 10 minutes using a stirring rod, after which 0.2 g of a hydrosilylation reaction catalyst (trade name: CAT-PL-50T, manufactured by Shin-Etsu Chemical Co., Ltd.) (platinum content 0.2 wt%) was added, followed by further mixing for 15 minutes. Thereafter, the mixture was heated at 100°C for 1 hour to obtain an addition reaction product (10 wt% HFE-7200 (Novec (registered trademark), manufactured by 3M Company) solution kinematic viscosity: 9.8 mm²/s; alkenyl group content: 4.0×10⁻³ mol/100 g).

### < Component (I) >

(I-1): Perfluoropolyether polymer having alkenyl groups at both terminals and represented by the following formula (c + d = 90, alkenyl group content: 0.012 mol/100 g) 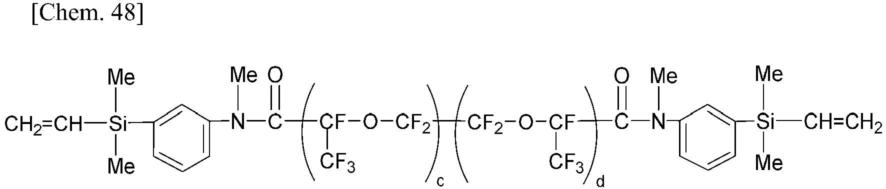
(I-2): Perfluoropolyether polymer having alkenyl groups at both terminals and represented by the following formula (c + d = 90, alkenyl group content: 0.012 mol/100 g)

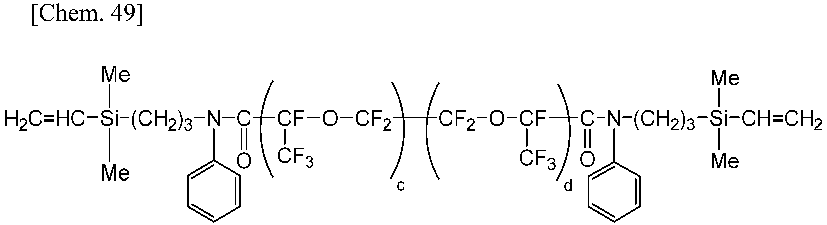

### < Component (II) >

(II-1): Compound represented by the following formula (SiH group content: 4.6×10⁻³ mol/g) 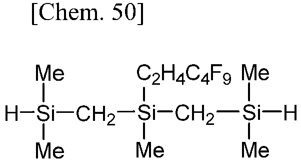
(II-2): Compound represented by the following formula (SiH group content: 4.6×10⁻³ mol/g)

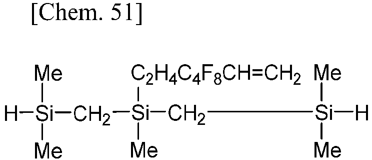

### [Component (B)]

Hydrophobic fumed silica obtained by subjecting A-130 (manufactured by Nippon Aerosil Co., Ltd., hydrophilic fumed silica) to surface hydrophobization treatment with treatment agent mixture of hexamethyldisilazane and 1,3-divinyl-1,1,3,3-tetramethyldisilazane (BET specific surface area: about 200 m²/g, surface carbon amount (carbon content): about 5.0 wt%, surface vinyl group amount: 3.00×10⁻³ mol/100 g, bulk density: about 50 g/L)

### [Component (b)]

(b-1): Dimethylpolysiloxane that is rubbery and has 30 wt% toluene solution viscosity (viscosity of solution obtained by dissolving organopolysiloxane in toluene at 30 wt%) of 14,000 mPa·s
(b-2): Dimethylpolysiloxane that is oily and has vinyl groups only at both terminals of molecular chain ("VF-600" manufactured by Shin-Etsu Chemical Co., Ltd., degree of polymerization: about 180, proportion of vinyl groups in all organic groups bonded to silicon atoms: 0.6 mol%)

### [Peroxide crosslinker]

### 2,5-Dimethyl-2,5-di-t-butylperoxyhexane

### Conditions of kneading and molding of composition

(1) Component (a) and component (b) in amounts (parts by weight) shown in the table below were kneaded using a pressure kneader to obtain a base compound.
(2) The base compound was kneaded with a peroxide crosslinker using a 3.5-inch two-roll mill for rubber to obtain a final composition. Roll processability during this operation was evaluated in the following manner.
(3) The final composition was crosslinked using a 75-ton press for rubber at 150°C for 15 minutes and subjected to post-curing at 200°C for 4 hours to obtain a rubber sheet.
(4) Using the rubber sheet, normal-state physical properties were measured in accordance with JIS K 6249.
(5) The rubber sheet was immersed in toluene at 23°C for 72 hours, and a volume swelling ratio was measured in accordance with JIS K 6258.

### [Method of evaluating roll processability]

Roll workability was evaluated when a kneading operation was continued for 20 minutes using a 3.5-inch two-roll mill for rubber and 200 g of a material.
⊚: No adhesion to rolls, and good roll workability
○: Some adhesion to rolls, but operable without stopping roll rotation
△: Adhesive force increases with kneading time, but removable if roll rotation is stopped
×: Adhesive force increases with kneading time, and material removal is difficult even if roll rotation is stopped

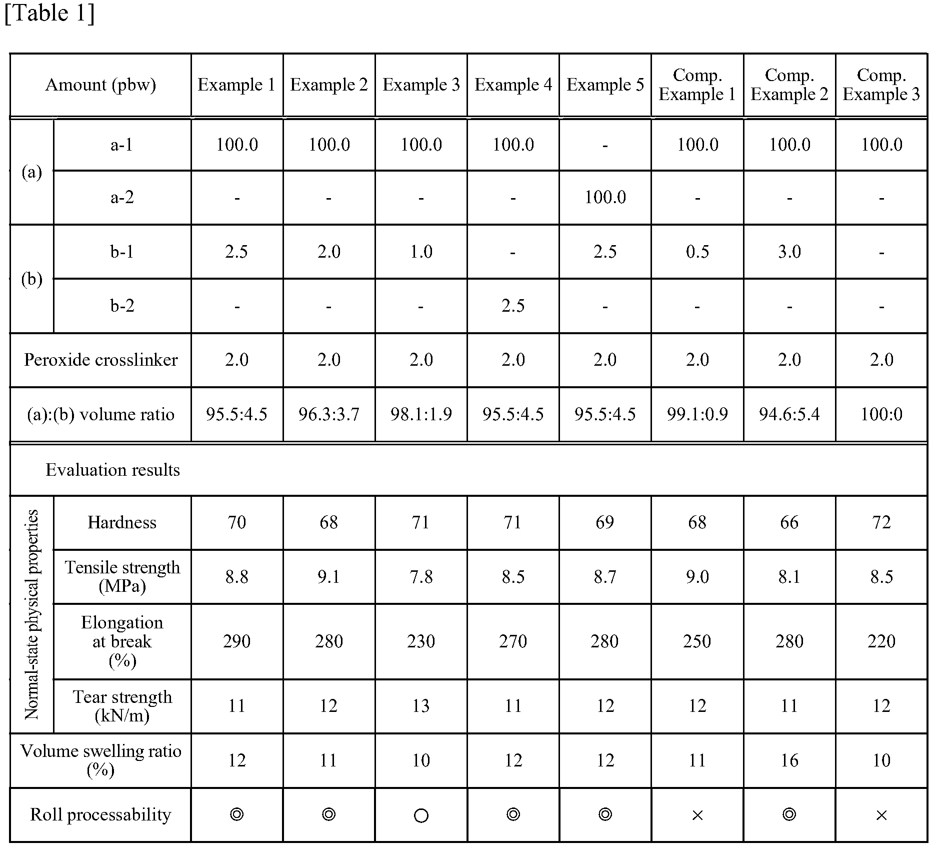

The above results show that in Examples 1 to 5, good solvent resistance was maintained, as indicated by low volume swelling ratios, while good roll processability was achieved. In contrast, in Comparative Examples 1 and 3, in which the organopolysiloxane content was low or zero, good solvent resistance was achieved, but roll processability was poor. When the organopolysiloxane content in the composition was at or above a certain level as in Comparative Example 2, roll processability was good, but solvent resistance was poor, as indicated by a high volume swelling ratio.

## Claims

1. A peroxide-crosslinked fluororubber composition comprising:
(a) a perfluoropolyether-based fluororubber mixture; and
(b) an organopolysiloxane,
wherein a volume ratio of components (a) and (b) is (a):(b) = 95:5 to 99:1.

2. The peroxide-crosslinked fluororubber composition according to claim 1, wherein the perfluoropolyether-based fluororubber mixture (a) is composed of
(A) an addition reaction product of a perfluoro compound (I) having at least two alkenyl groups in a molecule and having a perfluoroalkylene group or a divalent perfluoropolyether group in a main chain and an organosilicon compound (II) having at least two SiH groups in a molecule, and
(B) a reinforcing filler.

3. The peroxide-crosslinked fluororubber composition according to claim 1, wherein the organopolysiloxane (b) is an organopolysiloxane represented by the following average compositional formula (1):
(R¹¹)ₓSiO_{(4-x)/2} (1)
wherein R¹¹ is an unsubstituted or substituted monovalent hydrocarbon group, and x is a number satisfying 1.85 < x < 2.10.

4. The peroxide-crosslinked fluororubber composition according to claim 2, wherein component (I) is a perfluoro compound represented by the following general formula (2):
Rf[-U-Z(-Y-X)_{β}]₂ (2)
wherein Rf is a perfluoroalkylene group or a divalent perfluoropolyether group, U is independently a single bond, a carbonyl bond, or a divalent organic group, Z is independently a single bond, a nitrogen atom, a silicon atom, a carbon atom, a phosphorus atom, or a trivalent to octavalent organic group, Y is independently a single bond or a divalent organic group, X is independently an alkenyl group, and β is an integer of 1 to 7, provided that U and Z are not simultaneously single bonds.

5. The peroxide-crosslinked fluororubber composition according to claim 4, wherein Rf in formula (2) includes one or more repeating units (perfluorooxyalkylene units) represented by
-CₐF₂ₐO-
wherein a is an integer of 1 to 6.

6. The peroxide-crosslinked fluororubber composition according to claim 2, wherein component (II) is an organosilicon compound represented by the following general formula (3): 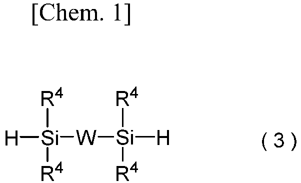 wherein R⁴ is independently an unsubstituted or substituted monovalent hydrocarbon group containing no aliphatic unsaturated bond, and W is a divalent organic group.

7. The peroxide-crosslinked fluororubber composition according to claim 6, wherein W in formula (3) is a group represented by any of formulae (i) to (iii): 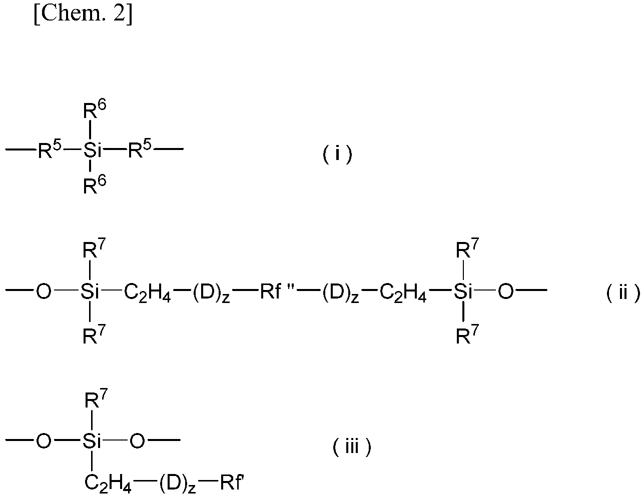
wherein Rf" is a perfluoroalkylene group or a divalent perfluoropolyether group; R⁵ is independently an oxygen atom or an unsubstituted or substituted divalent hydrocarbon group; R⁶ is independently an unsubstituted or substituted monovalent hydrocarbon group; R⁷ is an unsubstituted or substituted monovalent hydrocarbon group or a dimethylsiloxy group; D is independently -CH₂-, -CH₂O-, -CH₂OCH₂-, -E-NR⁸SO₂-, or -E-NR⁸-CO- wherein E is -CH₂- or a group represented by the following formula: 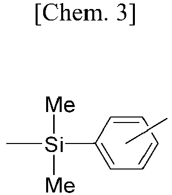
wherein Me is a methyl group, and R⁸ is a hydrogen atom or an unsubstituted or substituted monovalent hydrocarbon group; Rf' is a monovalent perfluoropolyether group or a perfluoroalkyl group; and z is independently 0 or 1.

8. The peroxide-crosslinked fluororubber composition according to claim 2, wherein the reinforcing filler (B) is a silica-based reinforcing filler, quartz powder, fused quartz powder, diatomaceous earth, or calcium carbonate.

9. A rubber molded article obtained by curing the peroxide-crosslinked fluororubber composition according to any one of claims 1 to 8.

10. A method for producing the peroxide-crosslinked fluororubber composition according to any one of claims 1 to 8, the method comprising kneading component (a) and component (b) using a closed-type kneading machine.

11. The method for producing the peroxide-crosslinked fluororubber composition according to claim 10, wherein the closed-type kneading machine is a pressure kneader or a Banbury mixer.
